# EUROPÄISCHE PATENTSCHRIFT

(11) **EP 3 305 489 B1**
(45) Veröffentlichungstag und Bekanntmachung des Hinweises auf die Patenterteilung: **30.01.2019**
(21) Anmeldenummer: 17195745.9
(22) Anmeldetag: 10.10.2017
(51) Int. Cl.: B27G 13/10, B27G 13/04, B27G 13/12

(54) **MESSERKOPF**
CUTTERHEAD
TÊTE DE LAME

(30) Priorität: 10.10.2016 CH 13512016
(43) Veröffentlichungstag der Anmeldung: 11.04.2018
(73) Patentinhaber: Oertli Werkzeuge AG, 8181 Höri bei Bülach (CH)
(72) Erfinder: Ehrle, Bruno, 8207 Schaffhausen (CH); Ostojic, Zoran, 8105 Regensdorf (CH); Paglione, Michael, 8213 Neunkirch (CH)
(74) Vertreter: Riederer Hasler & Partner Patentanwälte AG

(56) Entgegenhaltungen:
- EP-A1- 0 345 570
- EP-A2- 0 275 073
- WO-A2-2015/157871
- DE-A1- 3 505 974
- DE-A1- 10 000 330
- DE-A1-102014 015 199
- DE-U1- 29 508 112

## Beschreibung

Die Erfindung betrifft einen Messerkopf gemäss Oberbegriff von Anspruch 1.

### Stand der Technik

Durch die DE-OS 36 36 618 ist eine Messerwelle für spanabhebende Holzbearbeitungsmaschinen bekannt, insbesondere für Hobelmaschinen. Sie hat einen einstückigen Wellenkörper, der mehrere achsenparallele, sich zur Mantelfläche hin verengende Nuten aufweist, in denen je ein profiliertes, durch einen Fliehkeil verspanntes Einwegmesser sitzt, das formschlüssig in eine entsprechende Profilierung der Seitenfläche einer zwischen Einwegmesser und Fliehkeil liegenden Halteleiste eingreift. Dabei ist die Halteleiste unbeweglich mit dem Wellenkörper verbunden und elastisch verformbar. Sie ist in einem solchen Abstand von der Nutenwand der Nut angeordnet, dass bei gelöstem Fliehkeil ein dazwischenliegendes Messer leicht in Längsrichtung herausgezogen und ein neues Messer praktisch spielfrei eingeschoben werden kann. Wenn der Fliehkeil durch Rotation die Spannkraft erzeugt, wird die Halteleiste durch geringe elastische Verformung fest an das Einwegmesser angepresst, sodass dieses unverrückbar festliegt. Das Messer ist allerdings nur in einer einzigen, unveränderlichen Position einspannbar.

Das deutsche Gebrauchsmuster DE-U-89 14 809 offenbart einen Messerkopf zur spanabhebenden Bearbeitung von Holz, Kunststoff und dergleichen, insbesondere zum Längsprofilieren von Leisten und Platten, mit einem zylinderförmigen Grundkörper, der mehrere achsenparallele, zur Mantelfläche offene Nuten aufweist. In jeder Nut ist ein Messer zwischen einer Nutenwand der Nut und einer Halteleiste eingespannt, wobei eine Verzahnung des Messerrückens mit einer entsprechenden Verzahnung der Nutenwand formschlüssig in Eingriff steht. Die Nut zur Mantelfläche des Grundkörpers hin ist keilförmig verengt. In dieser ist ein Fliehkeil angeordnet, der das Messer bei rotierendem Grundkörper zwischen der Halteleiste und der anderen Nutenwand fest einspannt.

US Patentanmeldung Nr. 2002/0046632 offenbart einen Werkzeugkörper mit einer oder mehr Werkzeugaufnahmen, in denen Schneiden einsetzbar sind, die durch einen Klemmmechanismus gehalten werden. Um die Werkzeugkosten niedrig zu halten, schlägt die US 2002/0046632 vor, die Schneiden nachzuschärfen und einen gleich grossen Betrag am Schneidengrund zu entfernen und so eine neue Referenzkante zu erzeugen. Die eingesetzten Schneiden besitzen im Abstand vom Schneidengrund eine Rille, in die eine in der Werkzeugaufnahme ausgebildete, hervorstehende Rippe eingreift, wenn die Schneide in der Aufnahme festgeklemmt ist. Die Rille ist auf der der Schneidkante gegenüberliegenden Flachseite der Schneide vorgesehen und verhindert, dass die Schneide im Betrieb radial verrutschen kann. Gemäss US 2002/0046632 kann für die Erreichung des gleichen Zwecks die Rippe alternativ am Befestigungskeil vorgesehen sein.

US Patentanmeldung Nr. 2005/0265795 zeigt einen Messerkopf mit einer Werkzeugaufnahme, in der eine Schneide mittels eines Befestigungskeils festgeklemmt werden kann. Die Schneide weist am Schneidengrund und gegenüber der Flachseite mit der Schneidkante eine Fase auf, die den nötigen Freiraum schafft, wenn die Schneide in die Werkzeugaufnahmeöffnung eingesetzt wird.

Zum Auswechseln oder Verstellen des Messers wird zunächst der Fliehkeil durch radial nach innen gerichtete Krafteinwirkung, z.B. durch einen Hammerschlag, gelöst. Die Halteleiste, die in gespanntem Zustand geringfügig in Richtung auf das Messer elastisch verformt ist, kehrt in ihr; entspannte Lage zurück. In dieser Lage, die durch die Anschlagkante zwischen den beiden Streifen genau festgelegt ist, ist der Sitz des Messers soweit gelockert, dass es sich leicht in Richtung der Achse des Grundkörpers herausziehen lässt. Anschliessend, gegebenenfalls nach Anschleifen, kann das Messer z.B. in einer Position, die um eine Zahnbreite nach aussen verlagert ist, in Achsrichtung wieder eingeschoben werden. Sobald der Messerkopf in schnelle Umdrehung versetzt wird, zieht sich der Fliehkeil durch Zentrifugalkraft fest. Das Messer ist nun fest und exakt eingespannt. Da der Fliehkeil selbsthemmend ausgebildet ist, verbleibt er auch nach Stillsetzen des Messerkopfes in gespanntem Zustand. Ein Vorteil des beschriebenen Messerkopfes ist, dass die Schrauben beim Messerwechsel nicht gelöst werden müssen. Nachteilig hingegen ist, dass sich das Messer nur in axialer Richtung aus der Nut herausziehen lässt. Dies bedeutet, dass benachbarte Messerköpfe zuerst von der Werkzeugspindel entfernt werden müssen, bevor das Messer entfernt werden kann.

WO 2015/157871 offenbart einen Messerkop für eine Holzbearbeitungsmaschine mit einem zylinder-, kegelförmigen oder profilierten Grundkörper, der wenigstens zwei gleichmässig über seinen Umfang verteilt angeordnete Werkzeugaufnahmen für die Aufnahme einer Schneidplatte besitzt. Die Werkzeugaufnahmen umfassen jeweils in radialer Richtung sich verengende Nuten, in denen jeweils eine Schneidplatte zwischen einer ersten Nutenwand der Nute und einem Verschlusselement eingespannt ist. Zwischen der Schneidplatte und der ersten Nutenwand ist eine erste Formschlussverbindung vorgesehen. Ausserdem ist zwischen dem Verschlusselement und einer der ersten Nutenwand der Nut gegenüberliegenden zweiten Nutenwand ein Fliehkeil angeordnet. Der beschriebene Messerkopf zeichnet sich dadurch aus, dass zwischen dem Verschlusselement und dem Fliehkeil eine zweite Formschlussverbindung vorgesehen ist. Dies hat den Vorteil, dass dadurch ein radiales Einsetzen einer Schneidplatte ermöglicht ist.

Ein Problem der bekannten Messerköpfe ist, dass für einen Messerwechsel bei vorhandenem Achswinkel in der Regel die benachbarten Messerköpfe demontiert werden müssen.

Der in der DE-A-35 05 974 beschriebene Messerkopf umfasst eine oder mehrere Schneiden, die an der Auflagefläche zwei quaderförmige Ausnehmungen besitzen, in welche Vorsprünge, die an der Anlagefläche vorgesehen sind, spielfrei eingreifen. Der Klemmblock weist auf der der Spannfläche gegenüberliegenden Fläche eine Feder auf, die in eine Nut des Messerkopfes eingreift. Durch die Feder-Nut-Führung ist der Klemmblock nur radial beweglich. Ausserdem ist im Klemmblock eine Sacklochbohrung vorhanden, in welche das Ende eines Schraubenbolzens eingreift. Der Schraubenbolzen erstreckt sich dabei senkrecht zur Drehachse des Messerkopfes. Der Messerkopf zeigt zudem eine Schneide, die nicht parallel zur Achse des Messerkopfes liegt.

In der durch die DE-A-35 05 974 offenbarten Ausführungsform ist es nicht möglich, den Winkel der Schneide zur Drehachse des Messerkopfes zu ändern und dabei den gleichen Klemmblock zu verwenden. Dies bedeutet, dass für jeden Achswinkel der Schneide ein spezifischer Klemmblock benötigt wird. Ferner kann der Messerkopf weder mit einem Spandickenbegrenzer (Spanbrecher) noch mit einer Stützplatte ausgestattet werden. Der Schraubenbolzen übt durch seine Vorspannung eine Kraft in seiner Achse aus. Diese Vorspannkraft wird durch die gerade Auflage in der Sacklochbohrung im Klemmblock in der Achse des Schraubenbolzens weitergeleitet und übt deshalb durch die nicht senkrechte Spannfläche zwischen Klemmblock und Schneide eine seitliche Kraft auf die Schneide aus. Ein weiterer Nachteil ist, dass durch diese Anordnung von Klemmblock und Schraube im Betrieb, d.h. bei radial wirkender Zentrifugalkraft, eine ungünstige Klemmsituation hervorgerufen wird, da sich der Klemmblock um den Zapfen in der zur Drehachse senkrechten Ebene am Schraubenstift verdrehen wird.

Die DE-A-100 00 330 beschreibt einen Messerkopf mit einer oder mehrere Schneiden, welche in Drehrichtung des Messerkopfes betrachtet auf der Rückseite eine Stützplatte aufweisen, die mittels Formschluss mit dem Grundkörper verbunden ist. Diese Stützplatte kann keilförmig ausgebildet sein, um den Spanwinkel der Schneide zu ändern. Das Schraubenende ist dabei gewölbt ausgeführt, um Spanwinkeländerungen ausgleichen zu können. Bei diesem Messerkopf hat die Stützplatte die Aufgabe, den Spanwinkel der Schneide zu modifizieren. Zu diesem Zweck hat entweder die Stützplatte eine keilförmige Form oder es wird ein zweites keilförmiges Element zwischen der Stützplatte und der im Grundkörper vorhandene Auflagefläche eingelegt. Soll ein anderer Spanwinkel eingestellt werden, dann muss jeweils ein entsprechend angepasstes Druckstück eingesetzt werden. Die formschlüssige radiale Festlegung der Stützplatte und somit der Messerplatte erfolgt dadurch, dass die Stützplatte an ihrer Rückseite eine Verzahnung aufweist, die mit einer komplementären Verzahnung der Stützfläche der Messerkopfgrundkörperaussparung zusammenwirkt. Diese Art der radialen Sicherung der Messerplatte ist aufwendig in der Herstellung.Aufgabe der Erfindung
Es ist deshalb ein Ziel der vorliegenden Erfindung, einen Messerkopf für eine Werkzeugmaschine für die Holzbearbeitung zur Verfügung zu stellen, bei welchem bei einem Werkzeug- oder Messerwechsel eine vorgängige Demontage von zum Messerkopf benachbarten Werkzeugköpfen nicht mehr nötig ist. Ein weiteres Ziel der Erfindung ist die Bereitstellung eines Messerkopfes, bei welchem das Werkzeug, resp. Messer in radialer Richtung einsetz- und entfernbar ist. Noch ein Ziel ist es, einen Messerkopf vorzuschlagen, bei dem der Arbeitsaufwand für das Wechseln von Werkzeugen minimiert ist. Ein weiteres Ziel ist, dass bei einem Messerwechsel das neue Werkzeug in radialer und vorzugsweise axialer Richtung genau justiert ist. Noch ein Ziel ist es, dass eine zuverlässige radiale Festlegung des Messerkopfes sichergestellt ist.

### Beschreibung

Erfindungsgemäss werden die vorerwähnten Ziele durch die Merkmale des Anspruchs 1 realisiert. Vorteilhafte Weiterbildungen sind in den Unteransprüchen definiert.
Die Erfindung betrifft einen Messerkopf, insbesondere einen Messerkopf für eine Holzbearbeitungsmaschine, mit einem zylinder-, kegelförmigen oder profilierten Grundkörper zur rotierenden und spanabhebenden Bearbeitung eines Werkstücks. Der Messerkopf besitzt wenigstens zwei gleichmässig über seinen Umfang verteilt angeordnete Werkzeugaufnahmen für die Aufnahme eines flachen Werkzeugs, insbesondere einer Schneidplatte. Die Werkzeugaufnahmen haben Nuten, in denen jeweils eine Schneidplatte zwischen einer ersten Nutenwand und einem Klemmelement einspannbar ist, wobei die erste Nutenwand einen Achswinkel > 0 Grad und vorzugsweise > 5 Grad relativ zur Drehachse des Messerkopfes einnimmt.

In der zweiten Nutenwand der Nut sind eine oder mehrere senkrecht zur Achsrichtung des Messerkopfes verlaufende Gewindebohrungen vorgesehen, in denen jeweils eine Spannschraube aufnehmbar ist, mit der das Klemmelement in Richtung zur ersten Nutenwand verspannbar ist. Dies hat bei Messerköpfen, bei denen die Schneidplatte einen Achswinkel relativ zur Drehachse des Messerkpfes einnimmt, den Vorteil, dass die Schneidplatten gewechselt werden können, ohne dass benachbarte Messerköpfe demontiert werden müssten.

Erfindungsgemäss weist das Klemmelement auf der der Schneidplatte abgewandten Seite eine Ausnehmung auf, in welche die Spannschraube mit dem vorderen Ende eingreifen kann. Dadurch ist die Spannschraube in der Ausnehmung geführt, und das gleiche Klemmelement kann für verschiedene Achswinkel eingesetzt werden.

Zweckmässigerweise verengt sich die Ausnehmung radial nach innen, resp. von oben nach innen. Die Tiefe der Ausnehmung nimmt bevorzugt radial nach innen ab. Dies hat den Vorteil, dass bei zunehmender Zentrifugalkraft, sich das Klemmelement zwischen dem vorderen Ende der Schraube und der Schneidplatte verkeilt und noch mehr Klemmkraft auf die Schneidplatte ausübt und somit eine noch bessere Klemmung der Schneidplatte ermöglicht. Die Ausnehmung weist daher einen nach innen gerichteten Auslauf auf. Die Ausnehmung ist vorzugsweise keilförmig, wobei die Tiefe der keilförmigen Ausnehmung in radialer Richtung zweckmässigerweise kontinuierlich abnimmt. Im Querschnitt in radialer Richtung besitzt die Ausnehmung die Form eines Keils bzw. einer Rampe, deren Tiefe in Richtung der Drehachse des Messerkopfes abnimmt.

Erfindungsgemäß ist die Ausnehmung im Klemmelement als Kugelpfanne und das vordere Ende der Spannschraube als Rundkopf ausgebildet. Bevorzugt weist der Rundkopf die Form einer Halbkugel auf. Dies hat den Vorteil, dass zwischen dem Rundkopf und der Kugelpfanne jeweils ein Flächenkontakt realisiert ist unabhängig vom Achswinkel. Folglich kann ein und dasselbe Klemmelement bei Messerköpfen mit unterschiedlichen Achswinkeln eingesetzt werden.

Vorzugsweise ist in der ersten Nutenwand der Werkzeugaufnahme ein im Wesentlichen parallel zur Nutengrundfläche verlaufender Vorsprung vorgesehen, der als radialer Anschlag für die Schneidplatte dient, und die Schneidplatte weist auf der Rückseite eine Positioniernut auf, in welche der Vorsprung eingreifen kann. Auf diese Weise ist eine genaue Positionierung der Schneidplatte in der Werkzeugaufnahme gewährleistet.

Vorteilhaft ist der Vorsprung durch eine Passfeder gebildet, die in einer in der ersten Nutenwand vorgesehenen Nut aufgenommen ist. Eine solche Konstruktion lässt sich fertigungstechnisch kostengünstig realisieren. Auch bietet diese den Vorteil, dass die Passfeder ersetzt werden kann, wenn diese mal abgenützt sein sollte.

Eine bevorzugte Ausführungsform der Erfindung sieht vor, dass ein Federelement vorgesehen ist, das so in der Nute angeordnet ist, dass es beim Einspannen des Werkzeugs die Schneidplatte radial nach aussen drückt und damit in Anschlag mit dem Vorsprung bringt. Dies ermöglicht eine genaue Positionierung der Schneidplatte in der Werkzeugaufnahme. Ausserdem kann die Spannkraft niedriger sein als bei herkömmlichen Messerköpfen, wo die Schneidplatten gegen die im Betrieb wirkenden, grossen Zentrifugalkräfte gesichert sein müssen.

Vorteilhaft ist das Federelement am Klemmelement vorgesehen oder ausgebildet. Dies ist eine einfache und kostengünstige Konstruktion. Das Federelement kann beispielsweise eine Blattfeder, vorzugsweise aus Federstahl, sein, die an der Unterseite des Klemmelements angeordnet ist und von der Vorderseite des Klemmelements absteht und zwar so weit, dass das vordere Ende der Blattfeder unter die Schneidplatte greifen kann.

Gemäss einer anderen Ausführungsform kann das Federelement im Messerkopfkörper, z.B. in einem unterhalb des Schneidplattensitzes vorgesehenen Schlitz oder in einer Bohrung, angeordnet sein. Gemäss einer vorteilhaften Ausführungsform ist das Federelement eine Feder, die in einer Bohrung im Messerkopfkörper aufgenommen ist. Diese überragt den Absatz, auf dem die Schneidplatte angeordnet ist, um eine kleine Distanz, sodass die Schneidplatte mit der unteren Kante beim Einsetzen in die Werkzeugaufnahme auf der Feder ruht.

Gemäss einem anderen unabhängigen Aspekt der Erfindung ist das Klemmelement zweiteilig ausgebildet und umfasst einen Klemmkörper und eine Spanbrecherplatte. Dies hat den grossen Vorteil, dass die Spanbrecherplatte, die einem grösseren Verschleiss als der Klemmkörper selbst ausgesetzt ist, unabhängig vom Klemmkörper ersetzt werden kann.

Vorteilhaft ist zwischen der Spanbrecherplatte und dem Klemmkörper eine Formschluss- und/oder Kraftschlussverbindung vorgesehen. Dadurch können die beiden Komponenten so zusammengehalten sein, als ob sie einstückig wären.

Vorzugsweise ist die Formschlussverbindung zwischen dem Klemmkörper und der Spanbrecherplatte durch Erhebungen und Vertiefungen, die an den miteinander in Anschlag geratenden Seiten des Klemmkörpers und der Spanbrecherplatte vorgesehen sind, realisiert. Dabei ist fertigungstechnisch bevorzugt, wenn die Erhebungen an der Vorderseite des Klemmkörpers und die Vertiefungen an der Spanbrecherplatte ausgebildet sind.

Vorteilhaft ist die Kraftschlussverbindung durch ein oder mehrere Magnete realisiert, die in die Vorderseite des Klemmelements eingelassen sind. Dies ermöglicht es, die Spanbrecherplatte lösbar am Klemmkörper zu fixieren.

Grundsätzlich kann im Messerkopf auch noch eine Stützplatte vorgesehen sein, die zwischen der Schneidplatte und der ersten Nutenwand anordenbar ist. Das Vorsehen einer Stützplatte hat den Vorteil, dass ein bestimmter Messerkopf noch mit anderen beliebig profilierten Schneidplatten ausgestattet werden kann. Zweckmässigerweise ist die Stützplatte auf der Vorderseite so ausgebildet, dass sie mit einer Schneidplatte formschlüssig zusammenwirken kann. Damit die Stützplatte gegen die im Betrieb wirkenden Zentrifugalkräfte gesichert ist, ist zwischen der ersten Nutenwand und der Rückseite der Stützplatte eine Formschlussverbindung vorgesehen. Diese Formschlussverbindung kann durch einen auf der Rückseite der Stützplatte vorgesehenen Vorsprung ausgeführt sein, der mit einer Nut in der ersten Nutenwand zusammenwirken kann.

Vorzugsweise nimmt die erste Nutenwand der Nut mit einer vom Zentrum des Messerkopfes ausgehenden Radialen einen Winkel zwischen 0 und 40 Grad, vorzugweise zwischen 15 und 35 Grad und besonders bevorzugt zwischen 20 und 30 Grad ein.

In der ersten Nutenwand kann ein Zentrierbolzen eingelassen sein (z.B. Presssitz) für die laterale Zentrierung der Schneidplatte und gegebenenfalls des Stützelements.

Ausführungsbeispiele der Erfindung werden nun unter Bezugnahme auf die nachfolgenden Figuren näher im Detail beschrieben. Es zeigt:
- Figur 1:: Eine perspektivische, explosionsartige Teilansicht eines ersten Ausführungsbeispiels eines erfindungsgemässen Messerkopfes mit einer Schneidplatte, einem Klemmelement und einer Spannschraube;
- Figur 2:: Eine Ansicht wie in Fig. 1, jedoch von hinten;
- Figur 3:: Eine perspektivische, explosionsartige Teilansicht eines zweiten Ausführungsbeispiels eines erfindungsgemässen Messerkopfes, der im Vergleich zum ersten Ausführungsbeispiel noch mit einem Spanbrecher ausgestattet ist;
- Figur 4:: Eine Ansicht wie in Fig. 3, jedoch von hinten;
- Figur 5:: Eine perspektivische, explosionsartige Teilansicht eines dritten Ausführungsbeispiels eines erfindungsgemässen Messerkopfes, der im Vergleich zum zweiten Ausführungsbeispiel noch mit einer Stützplatte ausgestattet ist;
- Figur 6:: Eine Ansicht wie in Fig. 5, jedoch von hinten;
- Figur 7:: Eine perspektivische, explosionsartige Teilansicht eines vierten Ausführungsbeispiels eines erfindungsgemässen Messerkopfes, der zu den vorangegangenen Ausführungsbeispielen lediglich mit einer Stütz- und einer Schneidplatte ausgestattet ist;
- Figur 8:: Eine Ansicht wie in Fig. 7, jedoch von hinten;
- Figur 9:: Eine perspektivische Ansicht eines zweiteiliegen Klemmelements mit einem Klemmkörper und einer Spanbrecherplatte;
- Figur 10:: Eine perspektivische Ansicht des Klemmelements von Fig. 9 von hinten;
- Figur 11:: Eine perspektivische Vorderansicht des Klemmelements von Fig. 9 von schräg unten;
- Figur 12:: Eine perspektivische Hinteransicht des Klemmelements von Fig. 9 von schräg unten;
- Figur 13:: Eine Teilansicht eines Längsmittenschnitts durch einen erfindungsgemässen Messerkopf mit einem ersten Ausführungsbeispiel eines kombinierten Positioner- und Federelements;
- Figur 14: Ein zweites Auführungsbeispiel eines kombinierten Positioner- und Federelements, ebenalls in einem Längsmittenschnitt;
- Figur 15:: Ein drittes Ausführungsbeispiel eines kombinierten Positionier- und Federelements in Explosionsdarstellung;
- Figur 16:: Das Ausführungsbeispiel von Fig. 15 mit gelöstem Klemmelement; und
- Figur 17:: Das Ausführungsbeispiel von Fig. 15 mit dem Klemmelement in Betriebsstellung, d.h. geklemmter Schneidplatte;
- Fig. 18 und 19:: Ein erstes Ausführungsbeispiel einer profilierten Schneidplatte mit einer Zentrierausnehmung in Rück- und Seiteansicht;
- Fig. 20 und 21:: Ein zweites Ausführungsbeispiel einer profilierten Schneidplatte ohne Zentrierungausnehmung in Rück- und Seiteansicht;
- Fig. 22 und 23:: Ein drittes Ausführungsbeispiel einer profilierten Schneidplatte mit einer V-förmigen Zentriernut in Rück- und Seiteansicht; und
- Figur 24:: In Seitenansicht ein viertes Ausführungsbeispiel einer profilierten Schneidplatte mit einer gerundeten Zentriernut.

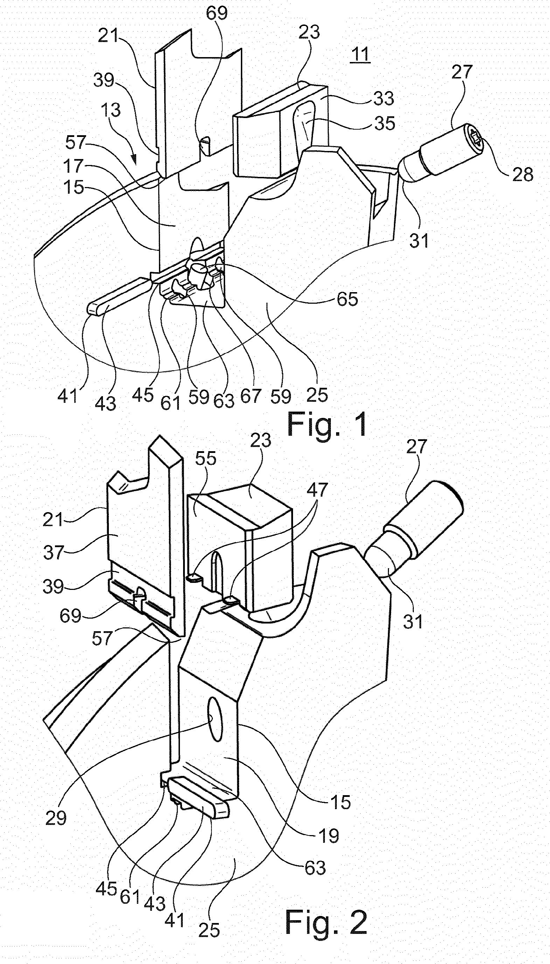

In den Figuren 1 und 2 ist ein erstes Ausführungsbeispiel eines erfindungsgemässen Messerkopfes 11 für die spanende Bearbeitung von Werkstoffen, wie Holz, Kunststoff, Leichmetall, Verbundwerkstoffe und dergleichen gezeigt. Der Messerkopf 11 besitzt mehrere, in der Regel zwei, über den Umfang verteilt angeordnete Werkzeugaufnahmen 13, von denen lediglich eine gezeigt ist. Die Werkzeugaufnahme 13 besteht aus einer Nut 15, deren erste und zweite Nutenwände 17,19 sich in einem Winkel zur Drehachse des Messerkopfes 11 erstrecken. In der Werkzeugaufnahme 13 ist jeweils ein Werkzeug in Gestalt einer Schneidplatte 21 aufnehmbar. Zum Einspannen der Schneidplatte 21 dient ein Klemmkörper 23, der mittels einer in den Messerkopfkörper 25 einschraubbaren Spannschraube 27 mit Angriffsmittel 28 (vorliegend Torx®-Angriffsmittel) gegen die erste Nutenwand 17 gepresst werden kann. Dazu ist im Messerkopfkörper 25 eine Gewindebohrung 29 vorgesehen, in welche die Spannschraube 27 einschraubbar ist.

Das Besondere an diesem Messerkopf 11 ist, dass die Gewindebohrung 29 und damit die Spannschraube 27 nicht in einem rechten Winkel, wie dies bei konventionellen Messerköpfen allgemein üblich ist, auf den Klemmkörper 23 trifft, sondern in einem Winkel ≠ 90 Grad. Um eine solche Klemmung zu ermöglichen, ist das vordere Ende der Spannschraube 27 als Rundkopf 31 ausgebildet. Der Klemmkörper 23 wiederum besitzt auf seiner der Gewindebohrung 29 zugewandten Rückseite 33 eine Ausnehmung 35, in die die Spannschraube 27 beim Festklemmen der Schneidplatte 21 eingreifen kann. Die Ausnehmung 35 ist vorzugsweise als Kugelpfanne ausgebildet, die den Rundkopf 31 der Spannschraube 27 aufnehmen kann. Dadurch wird gewährleistet, dass sich der Druckpunkt und somit die Einlenkung der Kraftübertragung immer am gleichen Punkt befindet. Der Rundkopf 31 besitzt bevorzugt die Form einer Halbkugel, wodurch das Kugelgelenk, welches von dem Rundkopf 31 und die Kugelpfanne gebildet ist, geeignet ist, auch grosse Achswinkel aufzunehmen.

Eine weitere Besonderheit des Messerkopfes 11 ist, dass die Schneidplatte 21 radial nach aussen anschlägt. Zu diesem Zweck hat die Schneidplatte 21 auf der Rückseite 37 eine in Achsrichtung verlaufende Positioniernut 39, die mit einem an der ersten Nutenwand 17 vorgesehenen Vorsprung 41 zusammenwirken kann. Fertigungstechnisch ist der Vorsprung durch eine Passfeder 43 realisiert, die in einer in der ersten Nutenwand 17 vorgesehen Nut 45 aufgenommen ist.

Streng genommen gilt die obige Definition betreffend die Achsrichtung nur, wenn der Achswinkel gleich null ist. Zwecks Vereinfachung der Beschreibung soll mit dem Begriff «Achsrichtung» jedoch im Rahmen der vorliegenden Erfindung und bei vorhandenem Achswinkel auch die Projizierende einer Parallelen zur Achsrichtung mitumfasst sein.

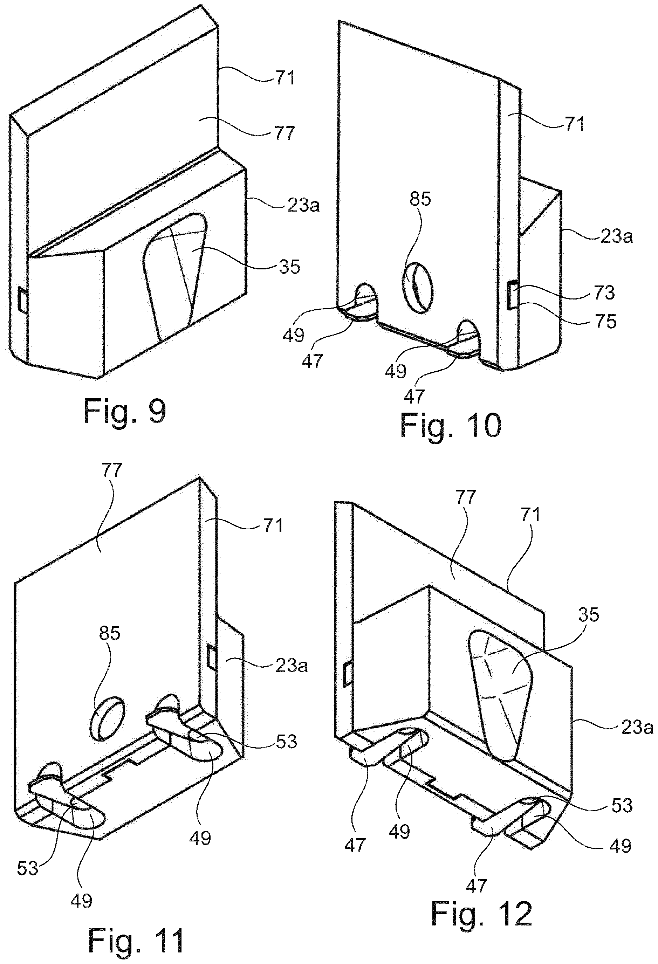

Damit die Schneidplatte 21 beim Einspannen automatisch radial nach aussen an der Passfeder 43 anschlägt, sind am Klemmkörper 23 zwei Blattfedern 47 vorgesehen. Die beiden Blattfedern 47 sind jeweils in einer Ausnehmung 49 an der Unterseite 51 des Klemmkörpers z.B. mittels Löten oder durch ein anderes Befestigungsmittel festgemacht (siehe Figuren 10 bis 12). Gemäss dem gezeigten Ausführungsbeispiel ist ein Niet 53 verwendet, der in eine nicht gezeigte Bohrung im Klemmelement 23 eingesetzt ist.

Wie in der Figur 2 ersichtlich ist, ragen die Blattfedern 47 von der Vorderseite 55 um eine bestimmte Distanz ab, sodass diese mit dem vorderen Ende beim Einspannen unter die untere Kante 57 der Schneidplatte 21 greifen können und die Schneidplatte 21 so über die Funktionsfläche 94 radial nach aussen drücken. Um den Blattfeder 47 eine freie Beweglichkeit zu ermöglichen, sind in der ersten Nutenwand 17 noch Ausnehmungen 59 vorgesehen, in welche die Blattfedern ragen können.

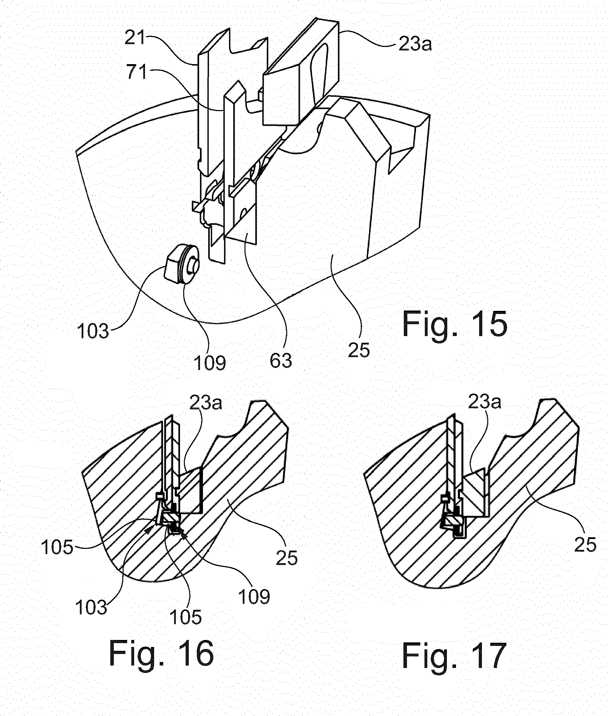

Als unterer Anschlag für die Schneidplatte 21 dient ein Absatz 61, der am Nutengrund 63 vorgesehen ist und aus der ersten Nutenwand 17 herausragt. Die vorderen Enden der Blattfedern 47 befinden sich bei eingesetztem Klemmelement 23 unterhalb des Absatzes 61, sodass die Schneidplatte 21 beim Einsetzen zunächst auf diesem ruht. Erst während dem Anziehen der Schraube 27 wird die Schneidplatte 21 durch die Bewegung des Klemmelementes 23 und somit auch der Blattfedern 47 geführt auf einer an der Unterkante der Schneidplatte ausgebildeten Funktionsfläche 94 in Richtung der ersten Nutenwand 17, radial nach aussen an den Absatz 61 und gleichzeitig auf die erste Nutenwand 17 gepresst (siehe auch Beschreibung zu den Fig. 17 bis 22 weiter unten).

Die durch den Betrieb entstehenden Fliehkräfte der Schneidplatte 21 werden somit durch den Vorsprung 41 aufgenommen, da zwischen der Schneidplatte 21 und der Spanbrecherplatte 71 eine rein kraftschlüssige Verbindung vorhanden ist. Somit wird die Schraube 27 viel weniger belastet und übernimmt nur den Anteil der Fliehkraft verursacht durch das Klemmelement 23;23a und gegebenfalls der Spanbrecherplatte 71.

Zur lateralen Positionierung der Schneidplatte 21 ist am Nutengrund 63 ein Positionierstift 65 vorgesehen, der in eine Bohrung 67 eingesetzt ist und in einem Winkel aus dem Nutengrund 63 ragt. Der Positionierstift 65 greift dabei in eine in der Unterkante 57 vorgesehene Ausnehmung 69, welche nicht zwingend zentrisch angeordnet sein muss, ein. Wie die weiteren Ausführungsvarianten der Schneidplatte 21 zeigen, kann sie auch ohne Ausnehmung 69 an eine der Aussenflanken lateral positioniert sein.

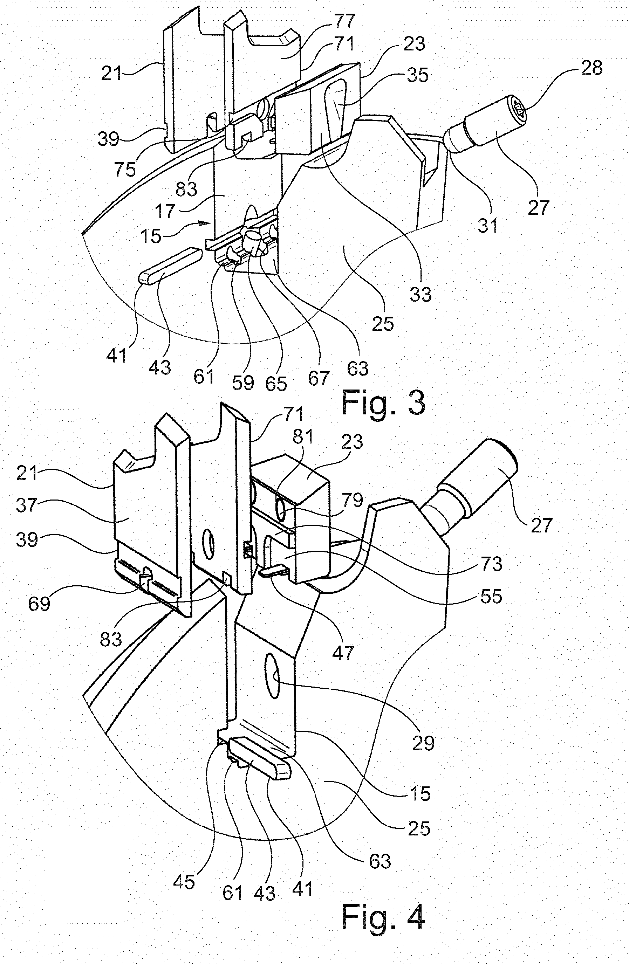

Das Ausführungsbeispiel gemäss den Figuren 3 und 4 unterscheidet sich vom ersten dadurch, dass eine Spanbrecherplatte 71 vorgesehen ist. Das Besondere daran ist, dass Klemmkörper 23a und Spanbrecherplatte 71 zweiteilig ausgeführt sind und form- und/oder kraftschlüssig miteinander verbindbar sind. Gemäss dem gezeigten Ausführungsbeispiel besitzt der Klemmkörper 23a auf der Vorderseite 55 des Klemmkörpers 23a eine Erhebung 73 mit T-förmiger Kontur, die mit einer entsprechenden ausgebildeten Vertiefung 75 in der Rückseite 77 der Spanbrecherplatte 71 formschlüssig zusammenwirken kann. Damit die Spanbrecherplatte 71 kraftschlüssig am Klemmkörper 23a gehalten ist, sind zwei Magnete 79 in Sacklöchern 81 in der Vorderseite 55 des Klemmkörpers 23a eingelassen. An der Unterkante der Spanbrecherplatte sind zwei Ausnehmungen 83 für den Durchtritt der Blattfedern 47 vorgesehen. Im Übrigen ist in der Mitte der Spanbrecherplatte 71 noch ein Rundloch 85 vorgesehen, das für den Kopf des aus dem Nutengrund 63 ragenden Positionierstifts 65 Platz bieten soll.

Um eine grosse Modularität zu ermöglichen, haben der Klemmkörper 23a und Spanbrecherplatte 71 zusammen die gleiche Stärke wie der Klemmkörper 23 aus dem ersten Ausführungsbeispiel. Damit können je nach Anwendung und Werkstoff Arbeiten mit und ohne Spanbrecherplatte ausgeführt werden. Ausserdem kann die einem Verschleiss ausgesetzte Spanbrecherplatte separat ersetzt werden, ohne gleich das ganze Klemmelement ersetzen zu müssen. Damit können Kosten gespart werden.

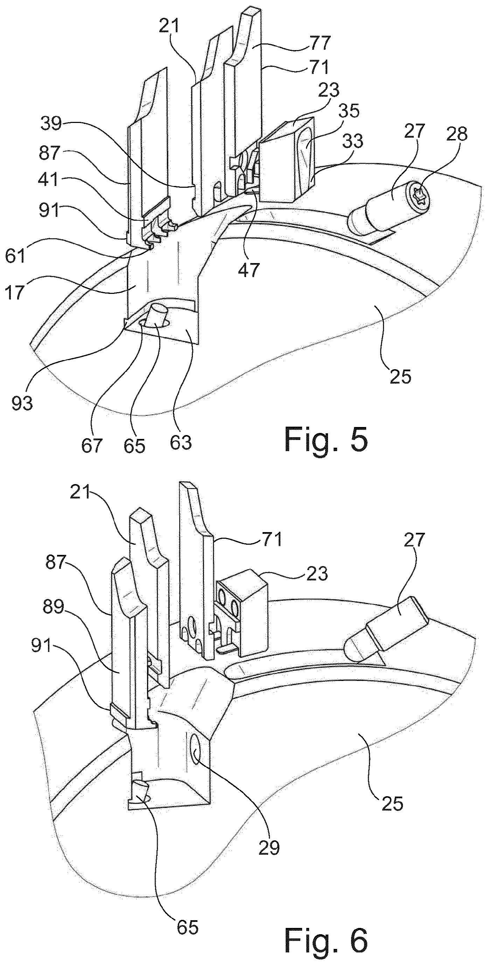

Das Ausführungsbeispiel gemäss den Figuren 5 und 6 unterscheidet sich vom ersten dadurch, dass neben einer Spanbrecherplatte 71 auch noch eine Stützplatte 87 vorgesehen ist. Die Stützplatte 87 kann dann zum Einsatz kommen, wenn mit einem Messerkopf 11 noch Arbeiten mit einem ganz anders profilierten Schneidmesser ausgeführt werden sollen. Die Stützplatte 87 hat auf der Rückseite 89 eine nach hinten abragenden Fuss 91 ausgebildet, der in eine entsprechende Nut 93 in der ersten Nutenwand 17 passt. Damit ist die Stützplatte 87 formschlüssig entgegen der im Betrieb wirkenden zentrifugalen Kräfte in der Werkzeugaufnahme 13 gehalten. Die Vorderseite 95 der Stützplatte 87 ist analog wie die erste Nutenwand 17 der ersten beiden Ausführungsbeispiele ausgebildet. Das heisst, es ist ein Vorsprung 41 vorgesehen, der formschlüssig mit der Positioniernut 39 der Schneidplatte 21 zusammenwirken kann, sowie ein Absatz 61 als Auflage für die Schneidplatte 21. Der Absatzt 61 weist Unterbrechungen auf, um einerseits für den Positionierstift 61 als auch für die Blattfedern 47 Platz zu bieten.

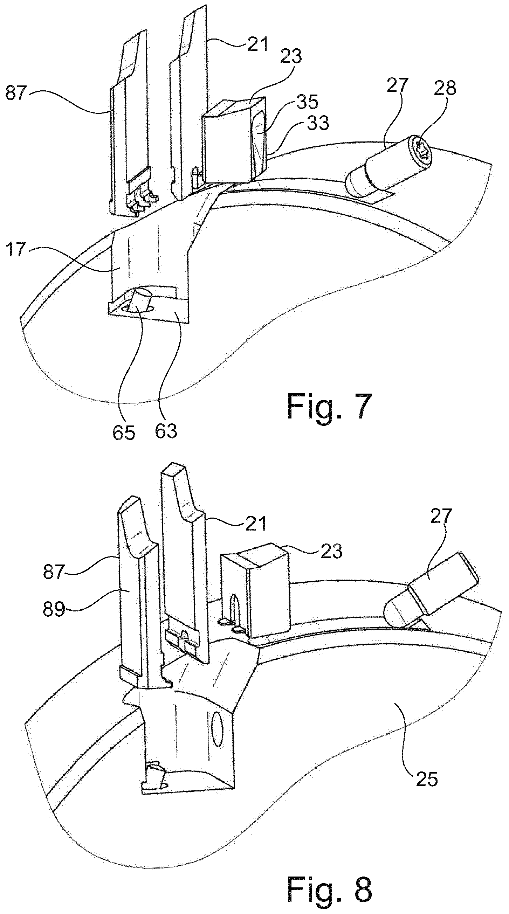

Das Ausführungsbeispiel gemäss den Figuren 7 und 8 unterscheidet sich von den vorangegangenen dadurch, dass eine Stützplatte 87 und eine Schneidplatte 21 vorgesehen sind, jedoch keine Spanbrecherplatte.

In den Figuren 9 bis 12 ist ein zweiteiliges Klemmelement gezeigt, wie es bereits oben im Zusammenhang mit der Beschreibung des zweiten Ausführungsbeispiels beschrieben wurde. Im ersten dadurch, dass eine Spanbrecherplatte 71 vorgesehen ist. Das Besondere am zweiteiligen Klemmelement ist, dass Klemmelement 23a und Spanbrecherplatte 71 form- und kraftschlüssig miteinander verbindbar sind.

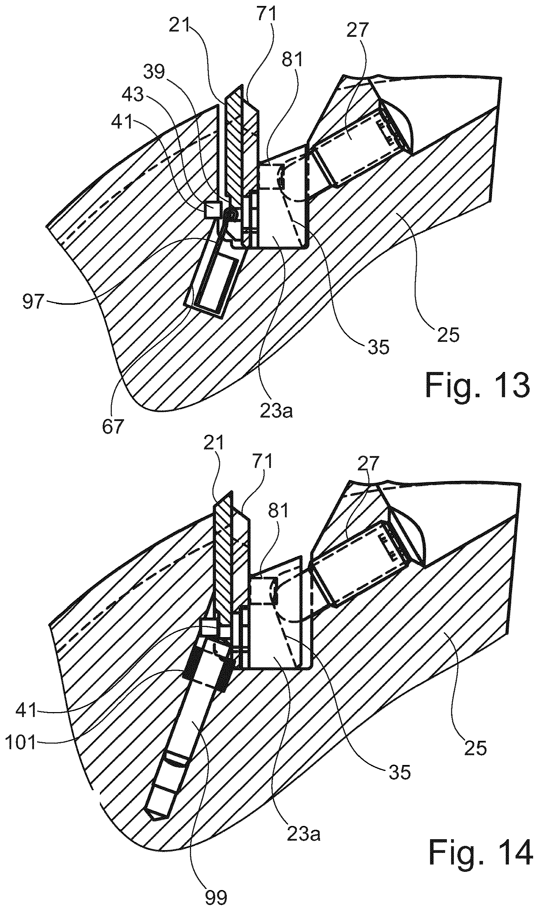

In den Figuren 13 und 14 sind weitere Varianten gezeigt, wie die Schneidplatte 21 radial nach aussen gegen eine Anschlagfläche positioniert werden kann. Im Unterschied zum bisher beschriebenen Ausführungsbeispiel, bei dem das Federelement am Klemmkörper 23 angeordnet ist, sehen die weiteren Varianten vor, dass anstelle eines reinen Positionierstiftes ein kombiniertes Positionier- und Federelement in die Bohrung 67 eingesetzt ist. Gemäss Ausführungsbeispiel von Fig. 13 ist eine Blattfeder 97 vorgesehen, die die Schneidplatte einerseits lateral positioniert und andererseits radial nach aussen drückt, sodass die untere Nutenwand der Positioniernut 39 der Schneidplatte 21 eine Anschlagfläche mit der Unterseite des Vorsprungs 41 bildet.

Gemäss Ausführungsbeispiel von Fig. 14 ist ein Stift 99 in die Bohrung 67 eingesetzt, der am Kopf mit einem Gummiaufsatz 101 ausgestattet ist. Der Gummiaufsatz 101 ist in diesem Fall das federnde Element, das die Schneidplatte radial nach aussen drückt.

In den Figuren 15 bis 17 ist ein weiteres Ausführungsbeispiel gezeigt, bei dem ein konisches Positionierlement 103 in einer Kavität 105 am Nutengrund 63 aufgenommen ist. Das Positionierelement 103 besitzt ein Trägerelement 107 und ein daran angeordnetes Gummielement 109. Wird das Klemmelement 23 gegen die Schneidplatte 21 gedrückt, wird das Positionierelement gegen die erste Nutenwand 17 geschoben und drück die Schneidplatte radial nach aussen, bis die untere Nutenwand der Nut 30 an der Unterkante des Vorsprungs 41 anliegt. Um die Schneidplatte 21 durch den Druck des Positionierelementes nicht zu überlasten, ist zwischen dem Positionierelement 103 und der Spanbrecherplatte 71 ein Gummielement eingebaut, welches die eventuell zusätzliche relative Verschiebung zwischen Positionierelement 103 und Spanbrecherplatte 71 ausgleichen kann

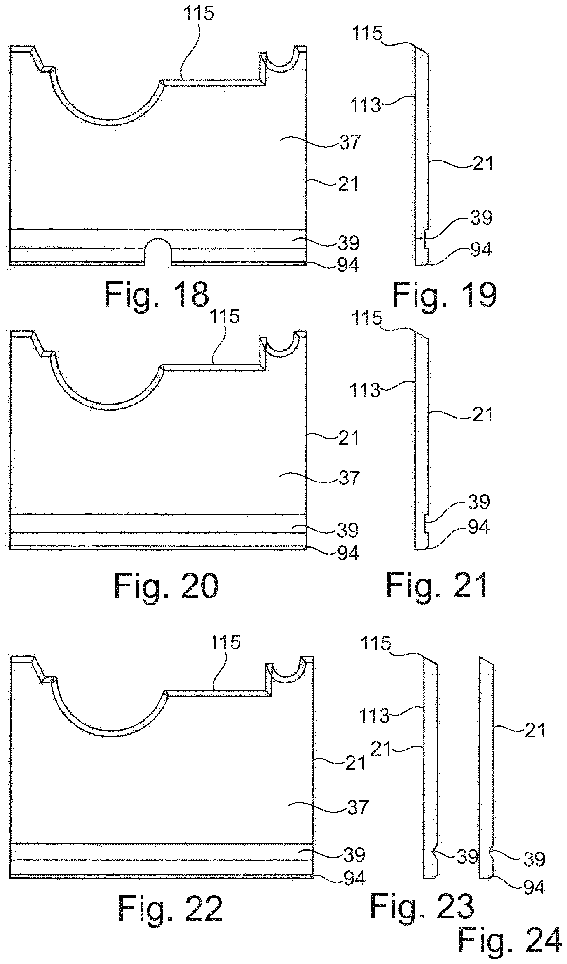

In den Figuren 18 bis 24 sind verschiedene Ausführungsformen von Schneidplatten 21 dargestellt, die mit dem erfindungsgemässen Messerkopf verwendet werden können. Die Schneidplatten 21 sind dabei im Regelfalle als Profilmesser mit einer Profilierung 111 ausgebildet. Wie weiter oben bereits beschrieben, kann die Schneidplatte 21 in der Mitte eine der Zentrierung dienende U-förmige Ausnehmung 69 aufweisen (Figuren 18 und 19). Wenn die Schneidplatte 21 in die Nut 15 eingelegt wird, greift der Kopf des Positionierstifts 65 in die U-förmige Ausnehmung 69 der Schneidplatte 21 ein, sodass diese lateral in der Werkzeugaufnahme positioniert ist.

Die gezeigten Schneidplatten 21 haben auf der Spanseite 113 eine Schneidkante 115 ausgebildet. An der der Schneidkante 115 diagonal gegenüberliegenden Kante ist am Schneidplattengrund die Funktionsfläche 94 in Gestalt einer Fase ausgebildet. Über diese Funktionsfläche 94 wird die Schneidplatte 21 vom einen oder den mehreren Federelementen 47;97;101;109 beim Einspannen radial nach aussen gestossen, bis die Unterkante der Positioniernut am Vorsprung 41 anliegt.

Wie aus den Figuren 18 bis 23 weiter hervorgeht, können die Positioniernuten 39 unterschiedlich ausgebildet ein. Sie können im Querschnitt U-förmig (Fig. 19 und 21), V-förmig (Fig. 23) oder gerundet (Fig. 24) ausgebildet sein.

Ein Messerwechsel geschieht beim erfindungsgemässen Messerkopf wie folgt: Zuerst wird mit einem Schraubendreher die Spannschraube 27 um zwei Umdrehungen gelöst, sodass das Klemmelement 23 resp. Klemmelement 23a mit dem Spanbrecher und Schneidplatte 21 in der Nut 15 um eine kurze Distanz in Richtung zweite Nutenwand 19 zurückgezogen wird (siehe Fig. 13). Dabei öffnet sich zwischen Spanbrecher und erster Nutenwand 17 ein Spalt und die Schneidplatte 21 kann entnommen werden.

Das Einsetzen einer neuen Schneidplatte geschieht in umgekehrter Reihenfolge. Dabei wird die Schneidplatte 21 in die Werkzeugaufnahme 13 eingesetzt und an den Spanbrecher oder, falls ein solcher nicht vorgesehen sein sollte, an das Klemmelement 23 angelehnt. Beim Eindrehen der Spannschraube 27 wird die Schneidplatte 21 durch das vorhandene Federelement, z.B. Federelement 97, angehoben und die Positioniernut 39 in Anschlag an den Vorsprung 41 gebracht. Das heisst, dass die radiale Positionierung automatisch erfolgt.

Der erfindungsgemässe Messerkopf dient insbesondere der spanabhebenden Bearbeitung von Holz, Kunststoff, Kork, Knochen, Kunststoff, Leichtmetalllegierungen, Holzwerkstoffe wie Spanplatten, Holzfaserplatten, Sperrholz usw. Als Werkzeuge kommen Schneidplatten mit einer geraden, bombierten oder profilierten Schneidkante zum Einsatz. Die Schneidplatten bestehen aus flachen Klingen einer Stärke zwischen ungefähr 1mm und 3 mm. Der Messerkopf ist im Betrieb auf einer Spindel einer Holzbearbeitungsmaschine drehfest angeordnet, wobei direkt benachbart weitere Messerköpfe auf der Spindel befestigt sein können. Das Lösen und Spannen des Klemmelements geschieht rechtwinklig zur Drehachse des Messerkopfes. Dies hat den Vorteil, dass für einen Messerwechsel die benachbarten Werkzeuge nicht demontiert werden müssen.

Die Erfindung betrifft einen Messerkopf 11 für eine Holzbearbeitungsmaschine mit einem zylinder-, kegelförmigen oder profilierten Grundkörper, der wenigstens zwei gleichmässig über seinen Umfang verteilt angeordnete Werkzeugaufnahmen 13 für die Aufnahme einer Schneidplatte 21 besitzt. Die Werkzeugaufnahmen 13 umfassen jeweils eine in radialer Richtung offene Nute 15, in denen jeweils eine Schneidplatte 21 zwischen einer ersten Nutenwand 17 und einem ein- oder zweiteiligen Klemmelement 23;23a,71 eingespannt ist. Als zusätzliche Variante kann der erfindungsgemässe Messerkopf 11 mit einer Stützplatte 87 ausgeführt sein, welche zwischen der Schneidplatte 21 und der ersten Nutenwand 17 anordenbar ist. Die Spannschrauben 27 sind auch bei Einsatz von Achswinkeln immer im Wesentlichen rechtwinklig zur Drehachse des Messerkopfes angeordnet und dadurch für den Messerwechsel stets zugänglich. Damit sich der Druckpunkt und dadurch die Einlenkung der Kraftübertragung immer am gleichen Punkt befindet, ist die Schraubenaufnahme am Klemmelement 23;23a vorzugsweise als Kugelpfanne und das vordere Ende der Schraube 27 als Rundkopf 31 ausgebildet. Am erfindungsgemässen Messerkopf ist ausserdem ein Federelement 47;97;101;109 vorgesehen, welches die Schneidplatte 21 beim Klemmvorgang automatisch positioniert und dieselbe über die Funktionsfläche 94 nach radial aussen an einen dafür vorgesehenen Anschlag 41 presst.

In der obigen Beschreibung sind die Ausführungsbeispiele jeweils anhand eines im Schnitt kreiszylindrischen Messerkopfs, bei dem das Werkzeug in einer axialen (zur Rotationsachse achsparallelen) Nut aufgenommen ist, beispielhaft beschrieben. In Rahmen der Erfindung kann die Werkzeugaufnahme resp. Nut jedoch auch in einem Winkel zur Rotationsachse verlaufen (z.B. konusförmiger Messerkopf). Die Nut kann somit 3 räumliche Winkel relativ zur Rotationsachse einnehmen und dadurch einen Spanwinkel, Kröpfungswinkel und Achswinkel definieren.

### Legende

- 11: Messerkopf
- 13: Werkzeugaufnahme
- 15: Nut
- 17: Erste Nutenwand
- 19: Zweite Nutenwand
- 21: Schneidplatte
- 23: Klemmelement, Klemmkörper
- 25: Messerkopfkörper
- 27: Spannschraube
- 29: Gewindebohrung
- 31: Rundkopf der Spannschraube
- 33: Rückseite des Klemmelements bzw. -körpers
- 35: Ausnehmung
- 37: Rückseite der Schneidplatte
- 39: Positioniernut
- 41: Vorsprung
- 43: Passfeder
- 45: Nut
- 47: Blattfeder am Klemmelement bzw. -körper
- 49: Ausnehmung
- 51: Unterseite des Klemmelements bzw. -körpers
- 53: Niet
- 55: Vorderseite des Klemmelements bzw. -körpers
- 57: untere Kante der Schneidplatte
- 59: Ausnehmungen in der ersten Nutenwand für die Blattfedern
- 61: Absatz
- 63: Nutengrund
- 65: Positionierstift
- 67: Bohrung
- 69: Ausnehmung der Schneidplatte
- 71: Spanbrecherplatte
- 73: Erhebung
- 75: Vertiefung
- 77: Rückseite
- 79: Magnete
- 81: Sacklöcher
- 83: Ausnehmungen an der Unterkante der Spanbrecherplatte
- 85: Rundloch
- 87: Stützplatte
- 89: Rückseite der Stützplatte
- 91: Fuss am Grund der Stützplatte
- 93: Nut
- 94: Funktionsfläche
- 95: Vorderseite
- 97: Blattfeder
- 99: Stift
- 101: Gummiaufsatz
- 103: Positionierlement
- 105: Kavität
- 107: Trägerelement
- 109: Gummielement
- 111: Profilierung der Schneidplatten
- 113: Spanseite der Schneidplatte
- 115: Schneidkante

## Patentansprüche

1. Messerkopf (11), insbesondere für eine Holzbearbeitungsmaschine,
- der wenigstens zwei vorzugsweise gleichmässig über seinen Umfang verteilt angeordnete Werkzeugaufnahmen (13) für die Aufnahme einer Schneidplatte (21) aufweist, wobei
- die Werkzeugaufnahmen (13) jeweils eine Nute (15) umfassen, in denen jeweils eine Schneidplatte (21) zwischen einer ersten Nutenwand (17) der Nute (15) und einem Klemmkörper (23) einspannbar ist,
- die erste Nutenwand (17) einen Achswinkel > 0 Grad relativ zur Drehachse des Messerkopfes einnimmt,
- in der zweiten Nutenwand (19) der Nute (15) eine oder mehrere senkrecht zur Achsrichtung des Messerkopfes verlaufende Gewindebohrungen (29) vorgesehen sind, in denen jeweils eine Spannschraube (27) aufnehmbar ist, mit der der Klemmkörper (23) in Richtung zur ersten Nutenwand (17) verspannbar ist, und
- der Klemmkörper (23) auf der der Schneidplatte (21) abgewandten Seite eine Ausnehmung (35) aufweist, in welche Ausnehmung (35) die Spannschraube (27) mit dem vorderen Ende (31) eingreifen kann und
**dadurch gekennzeichnet,**
- **dass** die Ausnehmung (35) im Klemmkörper (23) als Kugelpfanne und das vordere Ende der Spannschraube als Rundkopf (31) ausgebildet ist.

2. Messerkopf (11) nach Anspruch 1, **dadurch gekennzeichnet, dass** die Tiefe der Ausnehmung (35) radial nach innen abnimmt, wodurch der Klemmkörper (23) bei Auftreten einer Zentrifugalkraft beim Betrieb des Messerkopfes (11) eine zusätzliche Klemmkraft in Richtung der Schneidplatte (21) ausübt.

3. Messerkopf (11) nach einem der Ansprüche 1 oder 2, **dadurch gekennzeichnet, dass** in der ersten Nutenwand (17) der Nute (15) ein im Wesentlichen parallel zur Nutengrundfläche (63) verlaufender Vorsprung (41) vorgesehen ist, der als radialer Anschlag für die Schneidplatte (21) dient, und die Schneidplatte (21) auf der Rückseite (37) eine Positioniernut (39) aufweist, in welche der Vorsprung (41) eingreifen kann.

4. Messerkopf (11) nach Anspruch 3, **dadurch gekennzeichnet, dass** der Vorsprung (41) durch eine Passfeder (43) gebildet ist, die in einer in der ersten Nutenwand (17) vorgesehenen Nut (45) aufgenommen ist.

5. Messerkopf (11) nach einem der Ansprüche 1 bis 4, **dadurch gekennzeichnet, dass** ein Federelement (47;97;101;109) vorgesehen ist, das so in der Nute (15) angeordnet ist, dass es beim Einspannen die Schneidplatte (21) vorzugsweise geführt über eine Funktionsfläche (94) radial nach aussen drückt.

6. Messerkopf (11) nach Anspruch 5, **dadurch gekennzeichnet, dass** das Federelement (47) am Klemmkörper (23) vorgesehen oder ausgebildet ist und beispielsweise eine Blattfeder (47) ist, die an der Unterseite des Klemmkörpers (23) angeordnet ist und von der Vorderseite (55) des Klemmkörpers (23) absteht.

7. Messerkopf (11) nach Anspruch 5, **dadurch gekennzeichnet, dass** das Federelement (97;101;109) im Messerkopfkörper (25) angeordnet ist.

8. Messerkopf (11) nach einem der Ansprüche 1 bis 7, **dadurch gekennzeichnet, dass** eine Stützplatte (87) vorgesehen ist, die zwischen der Schneidplatte (21) und der ersten Nutenwand (17) anordenbar ist.

9. Messerkopf (11) nach Anspruch 8, **dadurch gekennzeichnet, dass** die Stützplatte (87) auf der Rückseite (89) einen Fuss (91) aufweist, der mit einer Hinterschneidung (93) in der ersten Nutenwand (17) zusammenwirken kann und auf der Vorderseite einen Vorsprung (41) besitzt, der mit der Positioniernut (39) der Schneidplatte (21) zusammenwirken kann.

10. Messerkopf (11) nach einem der Ansprüche 1 bis 9, **dadurch gekennzeichnet, dass** der Klemmkörper (23) zweiteilig ausgebildet ist und einen Klemmkörper (23a) und eine Spanbrecherplatte (71) umfasst.

11. Messerkopf (11) nach Anspruch 10, **dadurch gekennzeichnet, dass** zwischen der Spanbrecherplatte (71) und dem Klemmkörper (23a) eine Formschluss- und/oder Kraftschlussverbindung vorgesehen ist.

12. Messerkopf (11) nach Anspruch 11, **dadurch gekennzeichnet, dass** die Formschlussverbindung zwischen dem Klemmkörper (23a) und der Spanbrecherplatte (71) durch Erhebungen (73) und Vertiefungen (75), die an den miteinander in Anschlag geratenden Seiten des Klemmkörpers (23a) und der Spanbrecherplatte (71) vorgesehen sind, realisiert ist.

13. Messerkopfsystem mit einem Messerkopf gemäss einem der Ansprüche 1 bis 12 und einer Schneidplatte (21),
**dadurch gekennzeichnet,**
**dass** die Schneidplatte (21) auf der Rückseite in kurzem Abstand zur Schneidplattenunterkante eine in Achsrichtung verlaufende Positioniernute (39) und an der Schneidplattenunterkante eine Funktionsfläche (94) aufweist.

14. Messerkopfsystem nach Anspruch 13, **dadurch gekennzeichnet, dass** die Funktionsfläche (94) durch eine Fase gebildet ist, die die rückseitige Kante der Schneidplatte bricht.

## Claims

1. A cutter head (11), particularly for a woodworking machine,
- having at least two tool holders (13) for the purpose of holding a cutting insert (21), preferably arranged in a uniform distribution over the circumference thereof, wherein
- the tool holders (13) each have a groove (15), and in each of the same, one cutting insert (21) can be clamped between a first groove wall (17) of the groove (15) and a clamping element (23),
- the first groove wall (17) forms an axial angle > 0 degrees relative to the cutter head axis of rotation,
- one or more threaded holes (29) which run perpendicular to the axial direction of the cutter head are included in the second groove wall (19) of the groove (15), wherein a clamping screw (27) by means of which the clamping element (23) can be pretensioned in the direction of the first groove wall (17) can be held in each of the same,
- the clamping body (23) has a recess (35) on the side which faces away from the cutting insert (21), wherein the clamping screw (27) can engage via the front end (31) thereof with the recess (35), and
**characterized in that**
- the recess (35) in the clamping body (23) is designed as a ball socket, and the front end of the clamping screw is designed as a round head (31).

2. The cutter head (11) according to claim 1, **characterized in that** the depth of the recess (35) decreases radially inward such that the clamping body (23) exerts an additional clamping force in the direction of the cutting insert (21) when centrifugal force arises during operation of the cutter head (11).

3. The cutter head (11) according to claim 1 or 2, **characterized in that** a projection (41) which runs substantially parallel to the groove base (63) is included in the first groove wall (17) of the groove (15), and serves as a radial stop for the cutting insert (21), and the cutting insert (21) has a positioning groove (39) on the rear side (37) with which the projection (41) can engage.

4. The cutter head (11) according to claim 3, **characterized in that** the projection (41) is formed by a fitted key (43) which is held in a groove (45) furnished in the first groove wall (17).

5. The cutter head (11) according to any one of the claims 1 to 4, **characterized in that** a spring element (47; 97; 101; 109) is included, and is arranged in the groove (15) in such a manner that it presses the cutting insert (21) radially outward with guidance via a functional surface (94) during clamping.

6. The cutter head (11) according to claim 5, **characterized in that** the spring element (47) is included or constructed on the clamping body (23) and is preferably a leaf spring (47) arranged on the underside of the clamping body (23), and protrudes from the front side (55) of the clamping body (23).

7. The cutter head (11) according to claim 5, **characterized in that** the spring element (97; 101; 109) is arranged in the cutter head body (25).

8. The cutter head (11) according to one of the claims 1 to 7, **characterized in that** a support plate (87) is included, and can be arranged between the cutting insert (21) and the first groove wall (17).

9. The cutter head (11) according to claim 8, **characterized in that** the support plate (87) has a foot (91) on the rear side (89) thereof, which can work together with an undercut (93) in the first groove wall (17), and has a projection (41) on the front side thereof, which can work together with the positioning groove (39) of the cutting insert (21).

10. The cutter head (11) according to one of the claims 1 to 9, **characterized in that** the clamping body (23) is formed in two pieces and comprises a clamping body (23a) and a chip breaker plate (71).

11. The cutter head (11) according to claim 10, **characterized in that** a positive and/or non-positive connection is provided between the chip breaker plate (71) and the clamping body (23a).

12. The cutter head (11) according to claim 11, **characterized in that** the positive connection between the clamping body (23a) and the chip breaker plate (71) is realized by elevations (73) and depressions (75) furnished on the sides of the clamping body (23a) and the chip breaker plate (71) which rest against each other.

13. A cutter head system, having a cutter head according to one of claims 1 to 12, and a cutting insert (21),
**characterized in that**
the cutting insert (21) has, on the rear side thereof, at a short distance from the cutting insert lower edge, a positioning groove (39) running in the axial direction, and a functional surface (94) on the cutting insert lower edge.

14. The cutter head system according to claim 13, **characterized in that** the functional surface (94) is formed by a chamfer which interrupts the rear side edge of the cutting insert.

## Revendications

1. Tête de coupe (11), en particulier pour une machine de travail du bois
- qui présente au moins deux logements d'outils (13), placés en étant distribués de préférence de manière régulière sur sa circonférence, pour le logement d'une plaque de coupe (21), cependant que
- les logements d'outils (13) comprennent chacun une rainure (15) dans laquelle une plaque de coupe (21) peut être serrée entre une première paroi de rainure (17) de la rainure (15) et un corps de serrage (23),
- la première paroi de rainure (17) prend un angle d'axe > 0 degré par rapport à l'axe de rotation de la tête de coupe,
- une ou plusieurs forures filetées (29) sont prévues dans la seconde paroi de rainure (19) de la rainure (15) perpendiculairement à la direction axiale de la tête de coupe, forures dans chacune desquelles une vis de serrage (27) peut être logée avec laquelle le corps de serrage (23) peut être serré en direction de la première paroi de rainure (17) et
- le corps de serrage (23) présente, sur le côté opposé à la plaque de coupe (21), un évidement (35), évidement (35) dans lequel la vis de serrage (27) peut se mettre en prise avec l'extrémité antérieure (31),
**caractérisée en ce que** l'évidement (35) est configuré dans le corps de serrage (23) comme pivot sphérique et l'extrémité antérieure de la vis de serrage est configurée comme une tête ronde (31).

2. Tête de coupe (11) selon la revendication 1, **caractérisée en ce que** la profondeur de l'évidement (35) diminue radialement vers l'intérieur si bien que le corps de serrage (23) exerce, lors de l'apparition d'une force centrifuge lors du fonctionnement de la tête de coupe (11), une force de serrage supplémentaire en direction de la plaque de coupe (21).

3. Tête de coupe (11) selon l'une des revendications 1 ou 2, **caractérisée en ce qu'**une saillie (41), sensiblement parallèle à la surface du fond de la rainure (63), qui s'étend dans la première paroi de rainure (17) de la rainure (15) est prévue, saillie qui sert de butée radiale à la plaque de coupe (21) et la plaque de coupe (21) présente, sur la face arrière (37), une rainure de positionnement (39) dans laquelle la saille (41) peut se mettre en prise.

4. Tête de coupe (11) selon la revendication 3, **caractérisée en ce que** la saillie (41) est formée par une clavette (43) qui est logée dans une rainure (45) prévue dans la première paroi de rainure (17).

5. Tête de coupe (11) selon l'une des revendications 1à 4, **caractérisée en ce qu'**il est prévu un élément de ressort (47, 97 ; 101, 109) qui est placé dans la rainure (15) de telle manière qu'il appuie, lors du serrage, la plaque de guidage (21) radialement vers l'extérieur en la guidant de préférence sur une surface fonctionnelle (94).

6. Tête de coupe (11) selon la revendication 5, **caractérisée en ce que** l'élément de ressort (47) est prévu ou configuré sur le corps de serrage (23) et est, par exemple, un ressort à lame (47) qui est placé sur la face inférieure du corps de serrage (23) et qui fait saillie de la face antérieure (55) du corps de serrage (23).

7. Tête de coupe (11) selon la revendication 5, **caractérisée en ce que** l'élément de ressort (97 ; 101 ; 109) est placé dans le corps de la tête de coupe (25).

8. Tête de coupe (11) selon l'une des revendications 1à 7, **caractérisée en ce qu'**il est prévu une plaque d'appui (87) qui peut être placée entre la plaque de coupe (21) et la première paroi de rainure (17).

9. Tête de coupe (11) selon la revendication 8, **caractérisée en ce que** la plaque d'appui (87) présente sur la face arrière (89) un pied (91) qui peut coopérer avec une contre-dépouille (93) dans la première paroi de rainure (17) et possède, sur la face antérieure, une saillie (41) qui peut coopérer avec la rainure de positionnement (39) de la plaque de coupe (21).

10. Tête de coupe (11) selon l'une des revendications 1à 9, **caractérisée en ce que** le corps de serrage (23) est configuré en deux parties et comprend un corps de serrage (23a) et une plaque brise-copeaux (71).

11. Tête de coupe (11) selon la revendication 10, **caractérisée en ce qu'**il est prévu un raccord par complémentarité de forme et/ou par force entre la plaque brise-copeaux (71) et le corps de serrage (23a).

12. Tête de coupe (11) selon la revendication 11, **caractérisée en ce que** le raccord par complémentarité de forme entre le corps de serrage (23a) et la plaque brise-copeaux (71) est réalisé par des rehaussements (73) et des renfoncements (75) qui sont prévus sur les côtés qui viennent en butée du corps de serrage (23a) et la plaque brise-copeaux (71).

13. Système de tête de coupe avec une tête de coupe selon l'une des revendications 1 à 12 et une plaque de coupe (21), **caractérisé en ce que** la plaque de coupe (21) présente, sur la face arrière, une rainure de positionnement (39) qui s'étend dans le sens axial à une courte distance de l'arête inférieure de la plaque de coupe et une surface fonctionnelle (94) sur l'arête inférieure de la plaque de coupe.

14. Système de tête de coupe selon la revendication 13, **caractérisé en ce que** la surface fonctionnelle (94) est formée par un chanfrein qui interrompt l'arête sur la face arrière de la plaque de coupe.
